# EUROPEAN PATENT APPLICATION

(11) **EP 2 103 543 A1**
(43) Date of publication of application: **23.09.2009**
(21) Application number: 09152984.2
(22) Date of filing: 17.02.2009
(51) Int. Cl.: B65D 51/16

(54) **Airtight food container**

(30) Priority: 20.03.2008 IT MC20080045
(71) Applicant: Adamo S.R.L., 60022 Castelfidardo (AN) (IT)
(72) Inventor: Marinelli, Michele, 60022 Castelfidardo (AN) (IT)
(74) Representative: Baldi, Claudio

(57) **Abstract**

The present invention relates to a food container, of the type composed of a canister (2) and a corresponding top lid (3), which is provided with a lower perimeter lip-shaped seal (4), having a vent hole (5) and basically consisting in a sort of upward wing made of plastic material provided with elastic memory, designed to strictly adhere against the internal walls of the opening of the canister (2) when the lid (3) is placed in operating position.

## Description

### Airtight food container.

The present patent application for industrial invention relates to an airtight food container.

As it is known, glass or plastic containers are used for correct preservation of food.

Each container generally consists in a transparent canister closed on top by means of an airtight lid made of flexible thermoplastic material, mainly polyethylene PE or polypropylene PP.

Such a lid is provided on the lower side with a perimeter groove designed to exactly receive the top perimeter edge of the canister in order to realise mutual forced coupling.

On one side, the forced coupling prevents the accidental separation of the two aforementioned parts, and on the other side guarantees airtight seal to avoid undesired external-internal air circulation that may damage the contents.

Regardless of very large diffusion, this traditional technology is not exempt from technical-functional inconveniences.

The main inconvenience is represented by the complicated mode in which the canister and the lid of a traditional container are coupled.

As users well know, the coupling between the two parts requires pressing the first part on the second part, and equivalent energy must be applied on the lid to uncouple it from the canister.

In particular, in order to remove the lid, upward traction must be applied in one of the corners while folding the lid in "peeling-off" mode.

The said operations are rather difficult, especially for elder people who do not have very strong hands.

The specific purpose of the present invention is to obtain a food container that, although provided with a basically traditional general configuration, ensures application and removal of the airtight lid in a much more practical and rapid mode than prior containers.

As explained in detail below, the present invention is based on the presence of a lip-shaped perimeter seal made of rather soft rubber on the lower side of the lid of the new container, which is capable of being forced and perfectly adhered into the top section of the opening of the canister.

During insertion into the canister, the lid induces forced air expulsion, due to the fact that the soft lip-shaped seal is first detached from the walls of the canister and then perfectly adhered to them as soon as air expulsion is completed.

In any case, the close adhesion between the lip-shaped seal of the lid and the opening of the canister guarantees perfect airtight seal to the entire container of the invention, and, at the same time, prevents any accidental uncoupling between the two parts.

Nevertheless, it must be noted that, in order to favour the introduction of the lip-shaped seal into the opening of the canister, at least one hole is made on the said seal to allow air flowing outside freely from the container; without the said vent hole the closing of the lid would be difficult, if not impossible, due to the fact that the lip-shaped seal is perfectly adhered on the opening of the canister, in such a way that the pressure of the lid on the container would compress the air contained in it, thus opposing the stable closing of the lid, which would be subject to expulsion thrust by the compressed air.

The vent hole is also useful when opening the lid to prevent the creation of depression inside the container, which would of course impede the detachment of the lid from the container.

During the opening of the lid, the air flows from outside to the inside of the container, passing through the hole, before the lip-shaped seal has completely lost adherence with the opening of the container.

A further advantage in the use of the aforementioned lid consists in the fact that the soft seal can perfectly adapt to the internal surface of the walls of the canister, thus counterbalancing any inaccuracy or dimensional variations that can be found in different canister models.

For more clarity the description of the invention continues with reference to the enclosed drawing, which is intended for purposes of illustration only and not in a limiting sense, whereby:
- figure 1 is an axonometric bottom view of a portion of the lid of the container of the invention;
- figure 2 is a sectional view of the container of the invention, with lid, with a transversal vertical plane passing through the vent hole.

With reference to the said figures, the container (1) is generally composed of a canister (2), preferably made of glass, and an upper rigid closing lid (3), preferably made of plastic materials.

The authentic peculiarity of the container (1) consists in the fact that the lid (3) is provided with a lower lip-shaped perimeter seal (4), which basically consists in an upward-curved wing made of soft plastic material with elastic memory.

Preferably, the said seal is made of TPE, although silicone rubber or rubber of another suitable kind may be used alternatively.

A vent hole (5) is obtained on the seal (4), preferably in central position on one of the transversal sides.

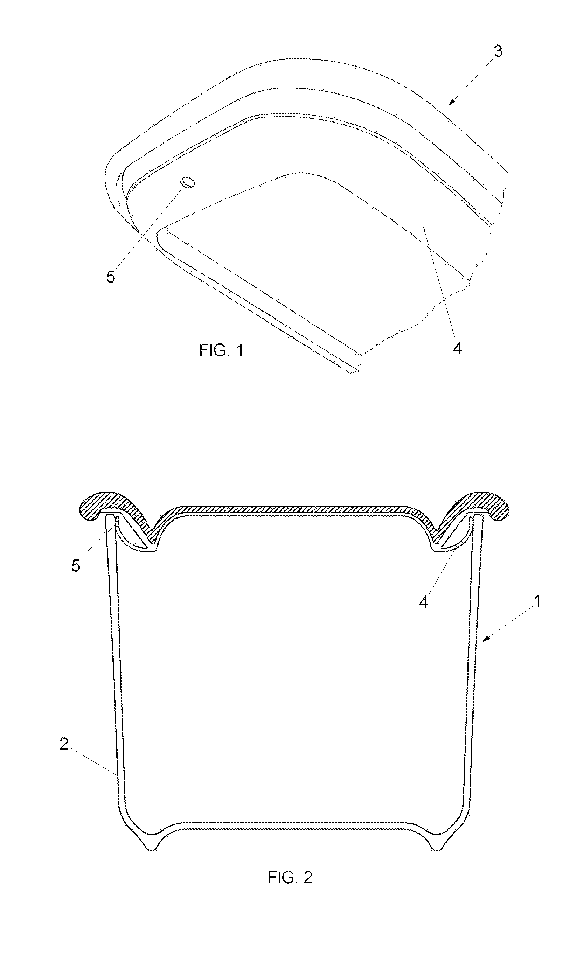

As mentioned above, the seal (4) is designed to strictly adhere against the internal walls of the canister (2) when the lid (3) is placed into closing position, as shown in figure 2.

The introduction of the lid (3) into the opening of the canister (2) generates a higher upward curve of the lip-shaped seal (4).

To remove the lid (3), upward traction is exerted on the lid (3), grabbing it on the side with the vent hole (5), in such a way to detach the lid slightly from the edge of the opening, in such a way that the external air first flows between the lower wall of the lid and the edge of the opening and then reaches the inside of the container passing through the hole (5).

It must be noted that the stable application of the seal (4) in lower position on the lid (3) can be obtained by means of "bi-material" moulding process or, alternatively, by means of gluing process.

## Claims

1. Food container, of the type composed of a canister (2) and a corresponding top lid (3), **characterised in that** the lid (3) is provided with a lower perimeter lip-shaped seal (4), having a vent hole (5) and basically consisting in a sort of upward wing made of plastic material provided with elastic memory, designed to adhere strictly against the internal walls of the opening of the canister (2) when the lid (3) is placed in operating position.

2. Food container according to claim 1, **characterised in that** the lid (3) has a rigid structure.

3. Food container according to claim 1, **characterised in that** the soft elastic material used to make the seal (4) consists in TPE.

4. Food container according to claim 1, **characterised in that** the soft elastic material used to make the seal (4) consists in silicone rubber.

5. Food container according to claim 1, **characterised in that** the soft elastic material used to make the seal (4) consists in non-silicone rubber.

6. Food container according to one or more of the above claims, **characterised in that** the canister (2) is made of glass.

7. Food container according to one or more of the above claims, **characterised in that** the lid (3) is made of plastic materials.

8. Food container according to claim 7, **characterised in that** the lid (3) and the seal (4) are irreversibly joined, being obtained by means of "bi-material" moulding process.

9. Food container according to one or more of claims 1 to 7, **characterised in that** the lid (3) and the seal (4) are irreversibly joined by means of gluing process.
